# EUROPÄISCHE PATENTSCHRIFT

(11) **EP 4 638 253 B1**
(45) Veröffentlichungstag und Bekanntmachung des Hinweises auf die Patenterteilung: **02.09.2026**
(21) Anmeldenummer: 23834047.5
(22) Anmeldetag: 18.12.2023
(51) Int. Cl.: B62J 43/28, H01M 50/242, H01M 50/249

(54) **SYSTEM ZUM TRANSLATORISCHEN VERSPANNEN EINER ENERGIESPEICHERVORRICHTUNG IN EINEM RAHMEN EINES FAHRRADS UND FAHRRAD**
SYSTEM FOR TRANSLATIONALLY TENSIONING AN ENERGY STORAGE DEVICE IN A FRAME OF A BICYCLE AND BICYCLE
SYSTÈME DE MISE SOUS TENSION EN TRANSLATION D'UN DISPOSITIF D'ACCUMULATION D'ÉNERGIE DANS UN CADRE D'UN VÉLO ET VÉLO

(30) Priorität: 20.12.2022 DE 102022214008
(43) Veröffentlichungstag der Anmeldung: 29.10.2025
(73) Patentinhaber: ZF Friedrichshafen AG, 88046 Friedrichshafen (DE)
(72) Erfinder: NEUMANN, Finn, 88046 Friedrichshafen (DE); SOMMER, Marc, 88074 Meckenbeuren (DE)
(74) Vertreter: ZF Friedrichshafen AG
(86) Internationale Anmeldenummer: PCT/EP2023/086313
(87) Internationale Veröffentlichungsnummer: WO 2024/133055

(56) Entgegenhaltungen:
- DE-A1- 102015 217 630
- DE-A1- 102020 204 883
- DE-B4- 10 216 148
- US-A1- 2020 062 339
- US-B2- 11 325 678

## Beschreibung

Die vorliegende Erfindung bezieht sich auf ein System zum translatorischen Verspannen einer Energiespeichervorrichtung in einem Rahmen eines Fahrrads. Ferner bezieht sich die vorliegende Erfindung auf ein Fahrrad mit einem solchen System zum Verspannen einer Energiespeichervorrichtung im Rahmen des Fahrrads.

Aus dem Stand der Technik sind Fahrräder mit einer Energiespeichervorrichtung bekannt, wobei die Energiespeichervorrichtung im Rahmen angeordnet ist. Solche Fahrräder werden mit Energie aus der Energiespeichervorrichtung angetrieben. Dabei gibt es unterschiedliche Systeme, um die Energiespeichervorrichtung im Rahmen zu arretieren.

Aus DE 10 2019 204 572 B3 ist eine Verriegelungseinrichtung für eine Energieversorgungseinrichtung für ein Fahrrad bekannt. Dokument DE102020204883A1 beschreibt die Präambel des Anspruchs 1.

Ausgehend von dem genannten Stand der Technik ist es Aufgabe der vorliegenden Erfindung ein verbessertes System zum Verspannen einer Energiespeichervorrichtung in einem Rahmen eines Fahrrads zur Verfügung zu stellen. Diese Aufgabe wird durch die Gegenstände der unabhängigen Patentansprüche gelöst. Weitere vorteilhafte Ausführungsformen gehen aus den Unteransprüchen hervor.

Die vorliegende Erfindung betrifft in einem ersten Aspekt ein System zum Verspannen einer Energiespeichervorrichtung in einem Rahmen eines Fahrrads. Die Energiespeichervorrichtung kann eine Batterie, einen Akkumulator oder eine andere elektrisch und alternativ oder zusätzlich chemische Energiespeichervorrichtung aufweisen. Der Rahmen kann ein Oberrohr, ein Unterrohr und ein Sitzrohr aufweisen. Der Rahmen kann eingerichtet sein, die Energiespeichervorrichtung aufzunehmen. Der Rahmen kann einen Ausschnitt aufweisen. Ein Unterrohr des Rahmens kann den Ausschnitt aufweisen, wobei durch Ausbilden des Ausschnitts in dem Unterrohr des Rahmens zwei nicht abgestützte Seitenwände ausgebildet werden. Das Fahrrad kann ein E-Bike oder ein (S)Pedelec oder ein Velomobil oder ein Cargobike sein. Auch ein E-Motorrad oder E-Scooter oder E-Roller kann unter dem Begriff Fahrrad subsummiert werden.

Das System weist zumindest zwei Keile sowie den Rahmen und die Energiespeichervorrichtung auf. Die Keile können beispielsweise aus Carbon, Kunststoff oder Aluminium geformt sein. Zumindest einer oder alternativ alle der Keile des Systems können eine ebene Grundfläche und zumindest eine dazu geneigte Fläche aufweisen. Durch relative Anordnung der Grundfläche zur geneigten Fläche kann eine verjüngende Form zu einem Ende des Keils hin ausgebildet werden. Zum anderen Ende des Keils kann eine sich verbreitende Form ausgebildet sein. An diesem Ende kann eine Stirnfläche des Keils ausgebildet sein. Der erste Keil ist an der Energiespeichervorrichtung ausgebildet und kann an einem Gehäuse der Energiespeichervorrichtung ausgebildet sein. Der zweite Keil ist an dem Rahmen ausgebildet. Der zweite Keil kann in der Aussparung des Unterrohrs des Rahmens ausgebildet sein. Die Keile sind so angeordnet, so dass beim Einsetzen der Energiespeichervorrichtung in den Rahmen die Keile gegeneinander drücken, um die Energiespeichervorrichtung im Rahmen zu verspannen. Dabei kann der erste mit dem zweiten Keil in Kontakt kommen. Es kann eine Kraft vom ersten auf den zweiten Keil wirken, wobei die Kraft von der Energiespeichervorrichtung auf den Rahmen wirken kann. Es kann eine Kraft vom zweiten Keil auf den ersten Keil wirken, welche betragsgleich zur vorherig definierten Kraft sein kann und entgegengesetzt wirken kann. Diese zweite Kraft kann von dem Rahmen über den zweiten Keil auf den ersten Keil und auf die Energiespeichervorrichtung wirken. Durch das Kräftegleichgewicht kann die Energiespeichervorrichtung im Rahmen verspannt werden. Beim Einsetzen kann dabei die Energiespeichervorrichtung gegenüber dem Rahmen verschoben werden, um die Energiespeichervorrichtung translatorisch im Rahmen zu verspannen. Dadurch kann eine Verspannung zwischen Rahmen und Energiespeichervorrichtung erzeugt werden, wobei ein Nutzer die Kraft, welche zum Erzeugen der Verspannung notwendig ist, aufbringen kann.

Durch das hiermit vorgestellte System kann die Energiespeichervorrichtung so im Rahmen des Fahrrads befestigt und verspannt werden, dass Schwingungen vom Rahmen auf die Energiespeichervorrichtung übertragbar sind. Die Energiespeichervorrichtung, häufig eine schwere Batterie oder ein schwerer Akkumulator, kann dabei als langsam schwingende und träge Masse fungieren. Über das Verspannen kann eine Eigenfrequenz des Rahmens verringert werden, indem die träge Masse der Energiespeichervorrichtung mit dem Rahmen koppelbar ist. Die nicht abgestützten Seitenwände des Ausschnitts des Rahmens können durch die Verspannung versteift und zusätzlich oder alternativ abgestützt werden. Ferner kann Schwingungsenergie vom Rahmen in Wärmeenergie umgewandelt werden, beispielsweise in Schwingungsenergie der Energiespeichervorrichtung und alternativ oder zusätzlich der Keile. Darüber hinaus ist es durch das vorliegende System möglich, Fertigungstoleranzen der Energiespeichervorrichtung, der Keile sowie des Rahmens auszugleichen, indem durch das Verspannen leichte Unregelmäßigkeiten der Geometrien oder Außenmaße von Energiespeichervorrichtung und alternativ oder zusätzlich des Rahmens ausgeglichen werden können. Schwingungen können bei einem Fahrrad mit einer Energiespeichervorrichtung beispielsweise dann entstehen, wenn ein Elektromotor mittels Energie der Energiespeichervorrichtung betrieben wird und beim Betrieb Schwingungen erzeugt. Diese Schwingungen können beispielsweise zu Schwingungen des Rahmens und dabei vor allem zu Schwingungen der nicht abgestützten Seitenwände führen. Besonders wenn Eigenfrequenzen des Rahmens durch die anregenden Schwingungen des Elektromotors getroffen werden, können hierbei ungewollte Schwingungsmaxima entstehen. Durch das hiermit beschriebene System ist es möglich, mittels der Verspannung zwischen der Energiespeichervorrichtung und dem Rahmen die Schwingungen zum einen zu unterbinden oder zumindest abzuschwächen, da die Eigenfrequenz des Rahmens durch das Koppeln mit der Energiespeichervorrichtung verringert wird. Zum anderen können die Schwingungen auch zumindest teilweise in Wärmeenergie umgewandelt werden, was die Schwingungsenergie im Rahmen verringern kann. Dies kann zu einem verbesserten Handling des Fahrrads führen. Alternativ oder zusätzlich kann dies dazu führen, dass weniger Materialermüdung der Elemente des Fahrrads, beispielsweise der Energiespeichervorrichtung oder des Rahmens, vorliegt, und dies kann zu einer längeren Lebensdauer der Elemente des Fahrrads führen. Mit den Keilen kann ein besonders einfaches, kostengünstiges und ökonomisches Verspannen der Energiespeichervorrichtung im Rahmen umgesetzt werden, wobei keine Sensoren oder Aktuatoren verwendet werden. Zum Verspannen kann beispielsweise ein Nutzer des Fahrrads, wie ein Fahrer, die Energiespeichervorrichtung in den Rahmen einschieben und die Kraft aufbringen, welche notwendig ist, um das Verspannen durchzuführen. Durch geeignete Materialauswahl zumindest eines Keils kann ein Dämpfungsverhalten der Keile und eine Umwandlung von Schwingungsenergie in Wärmeenergie optimiert werden. Ein solches System stellt eine Möglichkeit zum translatorischen Verspannen der Energiespeichervorrichtung in dem Rahmen des Fahrrads bereit.

Gemäß einer weiteren Ausführungsform kann zumindest einer der Keile eine gerade Fläche, eine leicht geneigte Fläche und eine stark geneigte Fläche aufweisen. Der zumindest eine Keil kann weitere Flächen aufweisen. Die leicht geneigte Fläche kann einen ersten Winkel mit der Grundfläche des Keils ausbilden. Die stark geneigte Fläche kann einen zweiten Winkel mit der Grundfläche ausbilden, welcher größer sein kann als der zuerst genannte Winkel zwischen der leicht geneigten Fläche und der Grundfläche. Die gerade Fläche kann parallel zur Grundfläche ausgebildet sein. Die gerade Fläche kann an die leicht geneigte Fläche angrenzen und die leicht geneigte Fläche kann an die stark geneigte Fläche angrenzen. Eine obere Fläche des Keils kann somit von dem verjüngten oder flachen Ende des Keils beginnend mit der stark geneigten Fläche weiter in die leicht geneigte Fläche übergehen und final in die gerade Fläche übergehen. Am Ende der geraden Fläche kann unter einem Winkel von 90° die Stirnfläche angeordnet sein, welche an die Grundfläche angrenzen kann. Die Flächen können eingerichtet sein, in Kontakt mit einem weiteren Keil zu kommen, um die Energiespeichervorrichtung im Rahmen zu verspannen. Dabei können die Flächen eingerichtet sein, in Kontakt mit zumindest einer Fläche eines weiteren Keils zu kommen. Beispielsweise kann beim Einsetzen zunächst die stark geneigte Fläche des ersten Keils mit der stark geneigten Fläche des zweiten Keils in Kontakt kommen. Bei weiterem translatorischem Verschieben der Energiespeichervorrichtung gegenüber dem Rahmen, und dabei des ersten Keils gegenüber dem zweiten Keil, kann sodann die leicht geneigte Fläche des ersten Keils mit der leicht geneigten Fläche des zweiten Keils in Kontakt kommen. Bei weiteren Einsetzen und translatorischem Verschieben kann die gerade Fläche des ersten Keils mit der geraden Fläche des zweiten Keils in Kontakt kommen. Ein Endanschlag beim Einsetzen der Energiespeichervorrichtung in den Rahmen kann dadurch definiert sein, dass die gesamte obere Fläche des Keils mit der oberen Fläche des anderen Keils in Kontakt ist. In diesem Zustand können die leicht und stark geneigte Flächen sowie die geraden Flächen des ersten und des zweiten Keils in Kontakt sein.

Durch Vorsehen der drei unterschiedlich geneigten Flächen des Keils kann eine graduelle Steigerung der Kraft bei der Verspannung bereitgestellt werden. So kann beispielsweise, wenn eine etwas größere Energiespeichervorrichtung vorliegt, ein Verspannen schon dann vorliegen, wenn sich lediglich die stark geneigten Flächen der Keile berühren. Wenn eine etwas kleinere Energiespeichervorrichtung vorliegt, kann ein Verspannen erst dann final erreicht werden, wenn etwa die gesamten oberen Flächen der Keile in Kontakt sind. Damit kann auch auf unterschiedliche Ausdehnungen bezüglich sich ändernder Umwelteinflüsse, wie sich ändernder Temperatur, von Rahmen und Energiespeichervorrichtung einfach reagiert werden.

Gemäß einer weiteren Ausführungsform kann die Energiespeichervorrichtung beim Einsetzen axial quer zum Unterrohr und axial entlang des Unterrohrs verschiebbar sein. Zumindest während eines Teils des Einsetzens kann dabei die Energiespeichervorrichtung axial quer zum Unterrohr verschiebbar sein. Alternativ oder zusätzlich kann zumindest während eines Teils des Einsetzens die Energiespeichervorrichtung axial entlang des Unterrohrs verschiebbar sein. Das System kann eingerichtet sein, dass es beim Einsetzen der Energiespeichervorrichtung bis zu einem Anschlagpunkt axial quer zum Unterrohr verschiebbar ist. Dabei kann, während die Energiespeichervorrichtung axial quer zum Unterrohr verschiebbar sein kann, die Energiespeichervorrichtung nicht axial entlang des Unterrohrs verschiebbar sein. Am Anschlagpunkt kann eine Fläche der Energiespeichervorrichtung an eine Fläche der Aussparung anschlagen. Das System kann eingerichtet sein, dass die Energiespeichervorrichtung beim Einsetzen nach Erreichen des Anschlagpunkts durch axiale Verschiebung quer zum Unterrohr axial entlang des Unterrohrs verschiebbar sein kann. Dabei kann während des Verschiebens der Energiespeichervorrichtung axial entlang des Unterrohrs ein Verschieben der Energiespeichervorrichtung axial quer zum Unterrohr unterbunden werden. Das Verschieben der Energiespeichervorrichtung axial entlang des Unterrohrs kann erfolgen, um die Energiespeichervorrichtung im Rahmen zu verspannen. Das Verschieben der Energiespeichervorrichtung axial quer zum Unterrohr kann dabei nicht zum Verspannen der Energiespeichervorrichtung im Rahmen führen. Der erste Keil kann in Längsrichtung der Achse des Unterrohrs angeordnet und ausgerichtet sein. Dabei kann das verjüngende Ende des Keils entlang der Achse des Unterrohrs ausgerichtet sein, entweder nach oben oder nach unten. Entlang der Achse des Unterrohrs kann sich der Keils dann verbreitern. Der zweite Keil kann ebenfalls entlang der Achse des Unterrohrs ausgerichtet sein und sich axial entlang des Unterrohrs verbreitern, wobei auch der zweite Keil mit seinem verjüngten Ende zu einem oberen oder unteren Ende des Unterrohrs ausgerichtet sein kann. Die ersten und zweiten Keile können so an der Energiespeichervorrichtung und dem Rahmen ausgebildet sein, dass sich die Keile beim axialen Verschieben quer zum Unterrohr nicht berühren.

Dadurch kann ein Einsetzen erleichtert werden, indem in einem ersten Schritt zunächst die Energiespeichervorrichtung in den Rahmen komplett eingesetzt wird, also ein weiteres axiales Verschieben quer zur Achse des Unterrohrs nicht mehr möglich sein kann. Sodann muss der Benutzer nur noch die Energiespeichervorrichtung entlang der Achse des Unterrohrs verschieben, um die Verspannung zu erzeugen. Beispielsweise kann das axiale Verschieben entlang der Achse des Unterrohrs von einem oberen Ende zum unteren Ende des Unterrohrs erfolgen. Somit kann nach dem finalen translatorischen Verspannen das System so verspannt sein, dass es ohne Nutzereinwirkung nicht in den entspannten Zustand übergehen kann. Die Gewichtskraft hält die Energiespeichervorrichtung in der verspannten Position und ein Nutzer müsste gegen die Gewichtskraft der Energiespeichervorrichtung diese aus der Verspannung nach oben hin entlang zum oberen Ende des Unterrohrs lösen, um in einem weiteren Schritt die Energiespeichervorrichtung axial quer zur Achse des Unterrohrs entnehmen zu können.

Gemäß einer weiteren Ausführungsform kann die Energiespeichervorrichtung beim Einsetzen um eine Rotationsachse rotierbar sein. Das System kann eingerichtet sein, dass beim Einsetzen die Energiespeichervorrichtung um eine Rotationsachse, welche quer zum Unterrohr sein kann, rotiert wird, um die Energiespeichervorrichtung im Rahmen zu verspannen. Die Rotationsachse kann dabei quer zum Unterrohr sowie quer zu einer vom Rahmen aufgespannten Ebene sein. Der erste Keil kann dabei so an die Energiespeichervorrichtung angeordnet sein, dass das verjüngende Ende quer zur Achse des Unterrohrs ausgerichtet ist und sich der Keil axial quer zum Unterrohr verjüngt beziehungsweise verdickt. Ähnlich kann der zweite Keil am Rahmen angeordnet sein. Ein verjüngtes Ende des zweiten Keils kann quer zur Achse des Unterrohrs ausgerichtet sein, beispielsweise kann das verjüngte Ende nach unten und von dem Ausschnitt weg zeigen, wobei sich der Keil nach oben hin und weiter in den Ausschnitt hinein verdicken oder verbreitern kann.

Durch eine solche Ausführungsform kann durch eine einfache Bewegung, ausgeführt durch den Nutzer, die Energiespeichervorrichtung in den Rahmen eingesetzt werden und damit gleichzeitig verspannt werden. Dies kann eine besonders effiziente Handhabung der Energiespeichervorrichtung gewährleisten. Je nach Fertigungstoleranzen oder thermisch unterschiedlicher Ausdehnungen der Elemente kann die Rotation um unterschiedlich große Winkel erfolgen. So kann beispielsweise, wenn die Energiespeichervorrichtung etwas größer ist, die Rotation nur bis zu einem ersten Winkel erfolgen, und wenn die Energiespeichervorrichtung etwas kleiner ist, beispielsweise bei kälteren Temperaturen und sich die Energiespeichervorrichtung stärker zusammenzieht als der Rahmen, kann die Energiespeichervorrichtung um einen größeren Winkel gegenüber dem Unterrohr rotiert werden. Ein optimales Verspannen kann damit in unterschiedlichen Konfigurationen gewährleistet werden. Um die Energiespeichervorrichtung final nach dem Einsetzen im Rahmen zu halten, kann ein Arretierungsmittel verwendet werden.

Gemäß einer weiteren Ausführungsform kann das Unterrohr das obere und das untere Ende aufweisen und die Energiespeichervorrichtung kann ein oberes und ein unteres Ende aufweisen. Die Keile können an den oberen oder unteren Enden ausgebildet sein. Dabei kann der erste Keil am oberen Ende der Energiespeichervorrichtung ausgebildet sein und der zweite Keil kann am oberen Ende des Rahmens ausgebildet sein. Alternativ kann der erste Keil am unteren Ende der Energiespeichervorrichtung ausgebildet sein und der zweite Keil kann am unteren Ende des Rahmens ausgebildet sein. Ferner kann die Rotationsachse, welche quer zum Unterrohr sein kann, am jeweils anderen Ende des Unterrohrs ausgebildet sein, um die Energiespeichervorrichtung im Rahmen zu verspannen. So können in einem ersten Fall der erste und der zweite Keil an den oberen Enden ausgebildet sein und die Rotationsachse kann am unteren Ende des Unterrohrs, also nahe am Elektromotor, ausgebildet sein. Im zweiten Fall kann die Rotationsachse am oberen Ende des Unterrohrs, also nahe am Lenker, ausgebildet sein und die Keile können an den unteren Enden ausgebildet sein.

Somit kann die Energiespeichervorrichtung von unten entweder im oder gegen den Uhrzeigersinn in den Rahmen eingesetzt und rotiert werden. Eine große Gestaltungsfreiheit während der Konstruktion von Rahmen und Energiespeichervorrichtung kann somit gewährleistet werden.

Gemäß einer weiteren Ausführungsform kann jeder der Keile genau eine geneigte Fläche aufweisen. Die geneigte Fläche bildet eine Fläche des Keils aus, wobei die Stirnseite und die Grundfläche die beiden anderen Seiten des Keils ausbilden können. Diese Ausführungsform kann in Verbindung mit einem rotierten Einsetzen und Verspannen verwendet werden.

Wenn die Energiespeichervorrichtung durch Rotation in das Unterrohr des Rahmens eingesetzt und verspannt wird, kann es ausreichend sein, genau eine geneigte Fläche in jedem Keil vorzusehen. Dadurch können die Keile einfacher ausgebildet werden.

Gemäß einer weiteren Ausführungsform kann zumindest ein Keil integraler Bestandteil des Rahmens oder der Energiespeichervorrichtung sein. Beispielsweise kann der erste Keil integraler Bestandteil der Energiespeichervorrichtung, beispielsweise eines Rahmens oder Gehäuses der Energiespeichervorrichtung sein. Alternativ oder zusätzlich kann der zweite Keil integraler Bestandteil der Innenseite der Aussparung und damit der nicht abgestützten Seitenwände des Unterrohrs sein.

Somit kann der zumindest eine Keil bereits bei Produktion von Energiespeichervorrichtung und Rahmen ausgebildet werden. Dies kann dazu führen, dass der Keil fester am Rahmen ausgebildet ist und örtlich nicht gegenüber dem Rahmen oder der Energiespeichervorrichtung verschiebbar sein kann.

Gemäß einer weiteren Ausführungsform kann der zumindest eine Keil eingerichtet sein, als Anbauteil an dem Rahmen oder an der Energiespeichervorrichtung angeordnet zu werden. So kann beispielsweise der erste Keil an der Energiespeichervorrichtung angeordnet werden und alternativ oder zusätzlich kann der zweite Keil an dem Rahmen angeordnet werden. Gemäß einer Ausführungsform kann zumindest einer der Keile als Anbauteil an Rahmen oder Energiespeichervorrichtung angeordnet werden und zumindest ein weiterer Keil kann als integraler Bestandteil des Rahmens oder der Energiespeichervorrichtung ausgebildet sein.

Durch Vorsehen eines Keils, welcher als Anbauteil angeordnet werden kann, kann eine beliebige Anzahl von Keilen nachgerüstet werden. Ein Ändern von Produktionsvorgängen kann somit vermieden werden, da Keile auch nach dem finalen Produktionsschritt des Rahmens oder der Energiespeichervorrichtung nachgerüstet werden können.

Gemäß einer weiteren Ausführungsform kann das System mehrere Keile aufweisen, welche zwischen der Energiespeichervorrichtung und dem Rahmen ausgebildet sein können. Es kann eine gerade Anzahl von Keilen vorgesehen sein, beispielsweise 4, 6, 8 oder 10 Keile, welche an diskreten und einzelnen Stellen von Rahmen und Energiespeichervorrichtung ausgebildet sein können. Alternativ kann entlang einer Kante oder Linie oder Fläche ein durchgängiger Keil an der Energiespeichervorrichtung und alternativ oder zusätzlich am Rahmen ausgebildet sein.

Bei Vorsehen von diskreten Keilen können diese punktuell dort ausgebildet sein, wo Schwingungsmaxima am Rahmen ohne Vorsehen des Verspannens der Energievorrichtung auftreten würden. Dies kann zu einer besonders effizienten Schwingungs- und Energieübertragung zwischen Rahmen und Energiespeichervorrichtung führen. Alternativ kann durch eine kanten-, flächen- oder linienmäßige Verbindung über die Keile zwischen Energiespeichervorrichtung und Rahmen eine besonders gute Schwingungs- oder Energieübertragung ausgebildet werden. Hier kann darauf verzichtet werden, für bestimmte Rahmen Schwingungsmaxima zu berechnen, um dann passend dazu die diskreten Teile genau an diesem Schwingungsmaxima anzuordnen. Jedoch kann eine höhere Spannkraft während des Einsetzens notwendig sein. Bei Vorsehen von diskreten Keilen kann beim Einsetzen oder Herausnehmen der Energiespeichervorrichtung in oder aus dem Rahmen weniger Kraft aufgewandt werden. Wenn ein Keil kontinuierlich ausgebildet ist, kann dabei ein ganzer Ausschnitt oder Abschnitt der Energiespeichervorrichtung und alternativ oder zusätzlich des Rahmens als Keil ausgebildet sein.

Ein zweiter Aspekt der vorliegenden Erfindung betrifft ein Fahrrad, wobei das Fahrrad ein System nach einer Ausführungsform des ersten Aspekts der vorliegenden Erfindung aufweist, um die Energiespeichervorrichtung im Rahmen zu verspannen. Das Fahrrad kann ein E-Bike, ein (S-)Pedelec, ein E-Motorrad, ein E-Roller oder ein E-Scooter sein.
- Fig. 1: zeigt ein Fahrrad gemäß einer Ausführungsform der Erfindung.
- Fig. 2: zeigt ein System eines Fahrrads aus Fig. 1 gemäß einer Ausführungsform der Erfindung.
- Fig. 3a, 3b: zeigen Elemente eines aus Fig. 2 gezeigten Systems gemäß einer Ausführungsform.
- Fig. 4a-d: zeigen Keile eines Systems gemäß einer Ausführungsform aus Fig. 2.
- Fig. 5a, 5b: zeigen ein System eines Fahrrads aus Fig. 1 gemäß einer Ausführungsform.
- Fig. 6a, 6b: zeigen das System aus Fig. 5a, 5b beim Einsetzen der Energiespeichervorrichtung.
- Fig. 7: zeigt schematisch ein System des Fahrrads aus Fig. 1 nach einer Ausführungsform der Erfindung.

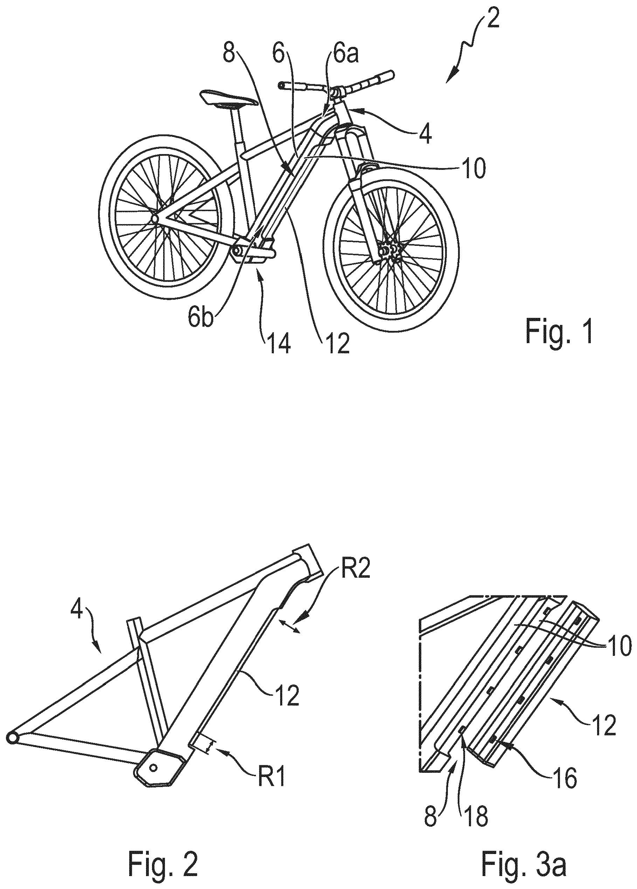

Fig. 1 zeigt ein Fahrrad 2 gemäß einer Ausführungsform der Erfindung. Das Fahrrad 2 weist einen Rahmen 4 auf. Der Rahmen 4 weist ein Unterrohr 6 auf, in welchem ein Ausschnitt 8 vorgesehen ist. Der Ausschnitt 8 zeigt dabei nach unten auf den Untergrund, auf dem das Fahrrad 2 steht. Durch den Ausschnitt 8 werden zwei Seitenwände 10 ausgeformt, welche gegenüberliegend und seitlich an dem Unterrohr 6 ausgebildet sind. Ferner weist das Fahrrad 2 eine Energiespeichervorrichtung 12 auf, die in Fig. 1 vollständig in den Ausschnitt 8 eingeschoben ist. Das Fahrrad 2 weist zudem einen Elektromotor 14 auf, welcher eingerichtet ist, mittels Energie der Energiespeichervorrichtung 12 das Fahrrad anzutreiben. Das Unterrohr 6 weist ein oberes Ende 6a und ein unteres Ende 6b auf. Das obere Ende 6a ist nahe an einem Lenker des Fahrrads 2 angeordnet, das untere Ende 6b ist nahe an einem Elektromotor 14 angeordnet.

Figur 2 zeigt ein System gemäß einer Ausführungsform der Erfindung. Es ist der Rahmen 4 des Fahrrads 2 aus Figur 1 gezeigt. Ferner ist die vollständig in dem Rahmen 4 eingesetzte Energiespeichervorrichtung 12 gezeigt. Ferner sind schematisch axiale Verschieberichtungen R1, R2 gezeigt. Die axiale Verschieberichtung R1 ist dabei entlang des Unterrohrs 6 und einer Achse des Unterrohrs 6 definiert, die axiale Verschieberichtung R2 ist quer zum Unterrohr 6 und in einer von dem Rahmen 4 aufgespannten Ebene definiert.

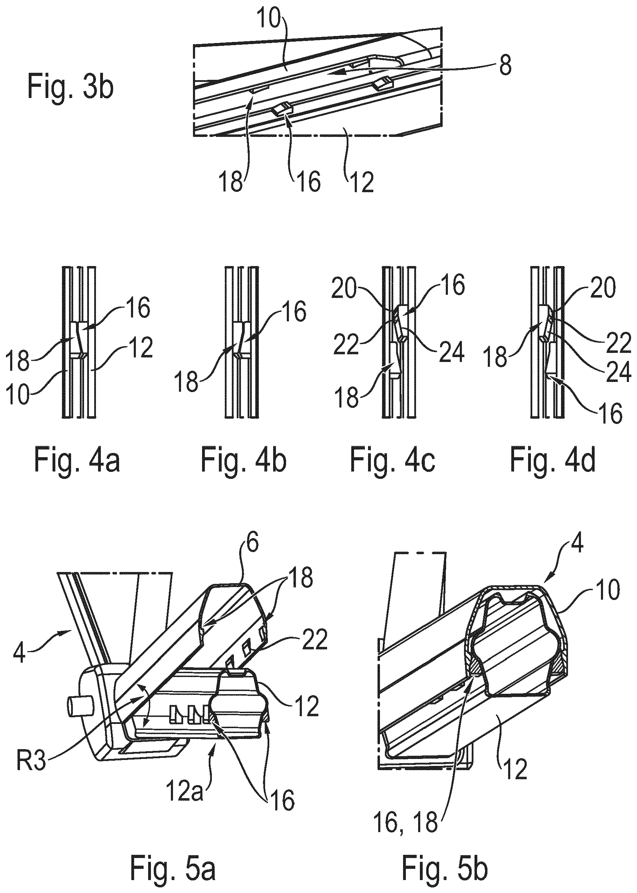

Figuren 3a und 3b zeigen den Ausschnitt 8 des Rahmens 4 mit den nicht abgestützten Seitenwänden 10. Ferner ist die Energiespeichervorrichtung 12 jeweils in einem nicht vollständig eingesetzten Zustand gezeigt. An der Energiespeichervorrichtung 12 sind erste Keile 16 ausgebildet und angeordnet. An dem Rahmen 4 und an der Innenseite der nicht abgestützten Seitenwände 10 des Ausschnitts 8 sind zweite Keile 18 ausgebildet und angeordnet. Die ersten Keile 16 der Energiespeichervorrichtung 12 sind entlang der Achse R1 ausgerichtet. Die zweiten Keile 18 sind ebenfalls entlang der Achse R1 ausgerichtet. Die Bezeichnung erste und zweite Keile bezieht sich auf die Nomenklatur und definiert nicht die Anzahl der Keile 16, 18. Wie in der in Figur 3a gezeigten Ausführungsform zu sehen ist, sind auf einer Seite der Energiespeichervorrichtung 12 vier erste Keile 16 ausgebildet und an einer Seite der Aussparung 8 und damit an einer nicht abgestützten Seitenwand 10 sind ebenfalls vier zweite Keile 18 abgebildet. Auf den abgewandten Seiten der Energiespeichervorrichtung 12 und des Ausschnitts 8 sind jeweils 4 weitere erste und zweite Keile 16, 18 ausgebildet. Die ersten Keile 16 sind dabei als Anbauteile an der Energiespeichervorrichtung 12 vorgesehen, und die zweiten Keile 18 sind integraler Bestandteil des Rahmens 4.

In den Figuren 4a-d sind zwei unterschiedliche Konfigurationen der ersten und zweiten Keile 16, 18 der Ausführungsformen aus Figuren 3a und 3b gezeigt. In den Figuren 4a und 4c ist ein verbreitertes Ende des zweiten Keils 18 weiter unten angeordnet und ein verbreitertes Ende des ersten Keils 16 weiter oben angeordnet, wobei die Ausrichtung bezüglich der Enden 6a, 6b, 12a, 12b ist. In den Ausführungsformen von Figuren 4b und 4d sind die verbreiterten Enden der Keile 16, 18 entgegengesetzt angeordnet. Das verbreiterte Ende des ersten Keils 16 ist unten angeordnet und das verbreiterte Ende des zweiten Keils 18 ist oben angeordnet. Ebenfalls in Figur 4d sind Flächen 20, 22, 24 des zweiten Keils 18 gezeigt. Der erste Keil 16 weist ebenfalls diese Flächen 20, 22, 24 auf, zu sehen in Fig. 4c. Die Keile 16, 18 weisen dabei jeweils genau eine gerade Fläche 20, eine leicht geneigte Fläche 22 und eine stark geneigte Fläche 24 auf. Dabei ist die gerade Fläche 20 am breiten Ende des Keils 16, 18, daran anschließend ist die leicht geneigte Fläche 22 und daran anschließend ferner ist die stark geneigte Fläche 24 angeordnet.

Beim Einsetzen der Energiespeichervorrichtung 12 in den Rahmen 4 bewegt ein Nutzer die Energiespeichervorrichtung 12 zunächst entlang der Achse R2 axial quer zum Unterrohr 6. Die Keile 16, 18 greifen noch nicht ineinander und das Verschieben und Einsetzen der Energiespeichervorrichtung 12 in die Aussparung 8 ist möglich. Wenn ein weiteres Einsetzen oder Einschieben der Energiespeichervorrichtung 12 in Richtung R2 nicht mehr möglich ist, ist ein Anschlagpunkt erreicht. Sodann wird die Energiespeichervorrichtung 12 durch den Nutzer in Richtung R1 axial verschoben. In der in den Figuren 3a und 3b gezeigten Ausführungsform wird dabei die Energiespeichervorrichtung 12 beim Einsetzen axial in Richtung zum unteren Ende 6b verschoben. Vor dem axialen Verschieben entlang R1 liegt die Situation gezeigt in Figur 4c vor, und nach dem Verschieben liegt die Situation gezeigt in Figur 4a vor. Durch Kraftausübung der Keile 16, 18 aufeinander erfolgt das Verspannen der Energiespeichervorrichtung 12 im Rahmen 4. Alternativ erfolgt das Verschieben entlang der Richtung R1 in Richtung des oberen Endes 6a. Vor dem Verschieben entlang R1 liegt die Situation wie gezeigt in Figur 4d vor, und nach dem Verschieben bis in die Endposition liegt die Situation gezeigt wie in Figur 4b vor. Auch hier wird die Energiespeichervorrichtung 12 gegen den Rahmen 4 verspannt.

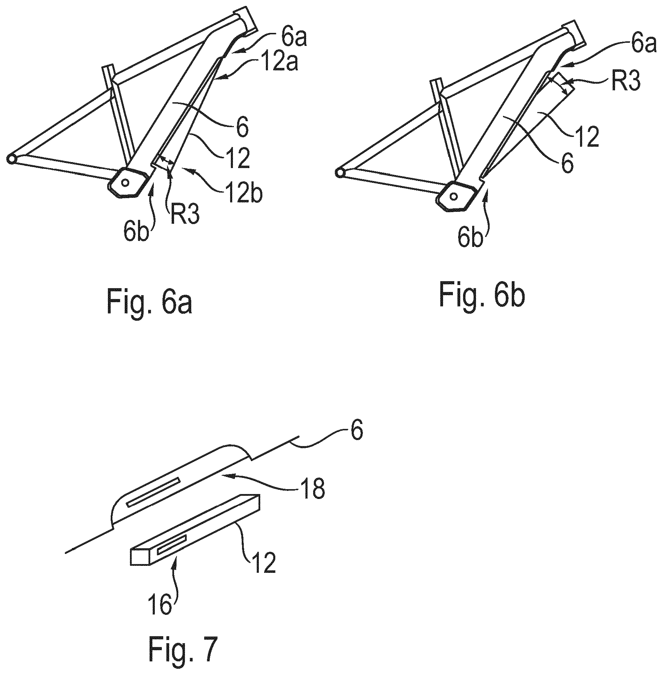

In den Figuren 5a und 5b ist eine weitere Ausführungsform des Systems des Fahrrads 2 aus Figur 1 dargestellt. Schematisch ist eine Rotationsrichtung R3 gezeigt, wobei die dazugehörige Rotationsachse quer zur Längserstreckung des Rahmens 4 und quer zur Erstreckung des Unterrohrs 6 angeordnet ist. Die ersten Keile 16 sind so an der Energiespeichervorrichtung 12 angeordnet, dass diese quer zur axialen Ausdehnung der Energiespeichervorrichtung 12 angeordnet sind. Die zweiten Keile 18 sind ebenfalls quer zur axialen Ausdehnung des Unterrohrs 6 angeordnet. Die zweiten Keile 18 weisen lediglich eine geneigte Fläche 22 auf. Die Keile 16 sind dabei an einem oberen Ende 12a der Energiespeichervorrichtung 12 ausgebildet. Die zweiten Keile 18 sind am oberen Ende 6a des Unterrohrs 6 ausgebildet. Figur 5a zeigt dabei das System im noch nicht vollständig eingesetzten Zustand und Figur 5b zeigt das System im vollständig eingesetzten Zustand. In der dazugehörigen Figur 6b ist in einer Seitenansicht ein Zustand während des Einsetzens der Energiespeichervorrichtung 12 in das Unterrohr 6 gezeigt. Dabei ist die Rotationsachse an dem unteren Ende 6b angeordnet und die Keile 16, 18 sind an den oberen Enden 6a, 12a angeordnet. Alternativ können die Keile 16, 18 auch an unteren Enden 6b, 12b angeordnet sein und die Rotationsachse kann am oberen Ende 6a angeordnet sein, wie gezeigt in Figur 6a.

Beim Einsetzen nimmt ein Nutzer die Energiespeichervorrichtung 12 und rotiert sie in Richtung R3, so dass durch eine Bewegung und Rotation der Energiespeichervorrichtung 12 gegenüber dem Unterrohr 6 diese in die Aussparung 8 eingesetzt wird und dabei gleichzeitig die Keile 16, 18 zu einem Verspannen der Energiespeichervorrichtung 12 im Rahmen 4 führen.

Figur 7 zeigt kontinuierlich ausgebildete Keile 16, 18. Dabei ist ein erster Keil 16 entlang einer Fläche oder Kante an der Energiespeichervorrichtung 12 ausgebildet. Der zweite Keil 18 ist ebenfalls entlang einer Fläche oder Kante komplementär zum ersten Keil 16 an dem Unterrohr 6 ausgebildet.

### Bezugszeichen

- 2: Fahrrad
- 4: Rahmen
- 6: Unterrohr
- 6a: oberes Ende des Unterrohrs
- 6b: unteres Ende des Unterrohrs
- 8: Ausschnitt im Unterrohr des Rahmens
- 10: Seitenwand des Ausschnitts
- 12: Energiespeichervorrichtung
- 12a: oberes Ende der Energiespeichervorrichtung
- 12b: unteres Ende der Energiespeichervorrichtung
- 14: Elektromotor
- 16: (erster) Keil an Energiespeichervorrichtung
- 18: (zweiter) Keil am Rahmen
- 20: gerade Fläche des Keils
- 22: leicht geneigte Fläche des Keils
- 24: stark geneigte Fläche des Keils
- R1: Axiale Verschieberichtung entlang des Unterrohrs
- R2: Axiale Verschieberichtung quer zum Unterrohr
- R3: Rotationsrichtung um Rotationsachse quer zum Unterrohr

## Patentansprüche

1. System zum Verspannen einer Energiespeichervorrichtung (12) in einem Rahmen (4) eines Fahrrads (2), **dadurch gekennzeichnet, dass** das System zumindest zwei Keile (16, 18) sowie den Rahmen (4) und die Energiespeichervorrichtung (12) aufweist, wobei ein erster Keil (16) an der Energiespeichervorrichtung (12) ausgebildet ist und ein zweiter Keil (18) an dem Rahmen (4) ausgebildet ist, wobei die Keile (16, 18) so angeordnet sind, sodass beim Einsetzen der Energiespeichervorrichtung (12) in den Rahmen (4) die Keile (16, 18) gegeneinander drücken, um die Energiespeichervorrichtung (12) im Rahmen (4) zu verspannen.

2. System nach Anspruch 1, wobei zumindest einer der Keile (16; 18) eine gerade Fläche (20), eine leicht geneigte Fläche (22) und eine stark geneigte Fläche (24) aufweist, und wobei die Flächen (20, 22, 24) eingerichtet sind, in Kontakt mit dem weiteren Keil (18; 16) zu kommen, um die Energiespeichervorrichtung (12) im Rahmen (4) zu verspannen.

3. System nach einem der vorhergehenden Ansprüche, wobei die Energiespeichervorrichtung (12) beim Einsetzen axial quer zum Unterrohr (6) und axial entlang des Unterrohrs (6) verschiebbar ist, und wobei das System eingerichtet ist, dass beim Einsetzen die Energiespeichervorrichtung (12) bis zu einem Anschlagpunkt axial quer zum Unterrohr (6) verschiebbar ist, und wobei das System eingerichtet ist, dass die Energiespeichervorrichtung (12) beim Einsetzen nach Erreichen des Anschlagpunkts durch axiale Verschiebung quer zum Unterrohr (6) axial entlang des Unterrohrs (6) verschiebbar ist, um die Energiespeichervorrichtung (12) im Rahmen (4) zu verspannen.

4. System nach einem der Ansprüche 1 oder 2, wobei die Energiespeichervorrichtung (12) beim Einsetzen um eine Rotationsachse rotierbar ist, und wobei das System eingerichtet ist, dass beim Einsetzen die Energiespeichervorrichtung (12) um eine Rotationsachse, welche quer zum Unterrohr (6) ist, rotiert wird, um die Energiespeichervorrichtung (12) im Rahmen (4) zu verspannen.

5. System nach Anspruch 4, wobei das Unterrohr (6) ein oberes Ende (6a) und ein unteres Ende (6b) aufweist, und wobei die Energiespeichervorrichtung ein oberes Ende (12a) und ein unteres Ende (12b) aufweist, und wobei die Keile (16, 18) an den oberen oder unteren Enden (12a; 12b, 6a; 6b) ausgebildet sind, und wobei die Rotationsachse, welche quer zum Unterrohr (6) ist, am anderen Ende (6b; 6a) des Unterrohrs (6) ausgebildet ist, um die Energiespeichervorrichtung (12) im Rahmen (4) zu verspannen.

6. System nach einem der Ansprüche 4 oder 5, wobei jeder der Keile (16; 18) genau eine geneigte Fläche (22; 24) aufweist.

7. System nach einem der vorhergehenden Ansprüche, wobei zumindest ein Keil (16; 18) integraler Bestandteil des Rahmens (4) oder der Energiespeichervorrichtung (12) ist.

8. System nach einem der vorhergehenden Ansprüche, wobei zumindest ein Keil (16; 18) eingerichtet ist, als Anbauteil an dem Rahmen (4) oder an der Energiespeichervorrichtung (12) angeordnet zu werden.

9. System nach einem der vorhergehenden Ansprüche, wobei das System mehrere Keile (16, 18) aufweist, welche zwischen der Energiespeichervorrichtung (12) und dem Rahmen (4) ausgebildet sind.

10. Fahrrad (2), wobei das Fahrrad (2) ein System nach einem der vorhergehenden Ansprüche aufweist, um die Energiespeichervorrichtung (12) im Rahmen (4) zu verspannen.

## Claims

1. System for bracing an energy storage device (12) in a frame (4) of a bicycle (2), **characterized in that** the system has at least two wedges (16, 18) as well as the frame (4) and the energy storage device (12), wherein a first wedge (16) is formed on the energy storage device (12) and a second wedge (18) is formed on the frame (4), wherein the wedges (16, 18) are arranged in such a way that, when the energy storage device (12) is inserted into the frame (4), the wedges (16, 18) press against one another in order to brace the energy storage device (12) in the frame (4).

2. System according to Claim 1, wherein at least one of the wedges (16; 18) has a straight face (20), a slightly inclined face (22) and a strongly inclined face (24), and wherein the faces (20, 22, 24) are configured to come into contact with the further wedge (18; 16) in order to brace the energy storage device (12) in the frame (4).

3. System according to one of the preceding claims, wherein during insertion the energy storage device (12) is displaceable axially transversely to the down tube (6) and axially along the down tube (6), and wherein the system is configured in such a way that, during insertion, the energy storage device (12) is displaceable axially transversely to the down tube (6) up to a stop point, and wherein the system is configured in such a way that the energy storage device (12), during insertion upon reaching the stop point, is, by axial displacement transversely to the down tube (6), displaceable axially along the down tube (6) in order to brace the energy storage device (12) in the frame (4).

4. System according to one of Claims 1 and 2, wherein, during insertion, the energy storage device (12) is rotatable about a rotation axis, and wherein the system is configured so that, during insertion, the energy storage device (12) is rotated about a rotation axis that is transverse to the down tube (6) in order to brace the energy storage device (12) in the frame (4).

5. System according to Claim 4, wherein the down tube (6) has an upper end (6a) and a lower end (6b), and wherein the energy storage device has an upper end (12a) and a lower end (12b), and wherein the wedges (16, 18) are formed on the upper or lower ends (12a; 12b, 6a; 6b), and wherein the rotation axis that is transverse to the down tube (6) is formed on the other end (6b; 6a) of the down tube (6) in order to brace the energy storage device (12) in the frame (4).

6. System according to one of Claims 4 and 5, wherein each of the wedges (16; 18) has exactly one inclined face (22; 24).

7. System according to one of the preceding claims, wherein at least one wedge (16; 18) is an integral constituent part of the frame (4) or of the energy storage device (12).

8. System according to one of the preceding claims, wherein at least one wedge (16; 18) is configured to be arranged as an add-on part on the frame (4) or on the energy storage device (12).

9. System according to one of the preceding claims, wherein the system has a plurality of wedges (16, 18) which are formed between the energy storage device (12) and the frame (4).

10. Bicycle (2), wherein the bicycle (2) has a system according to one of the preceding claims for bracing the energy storage device (12) in the frame (4).

## Revendications

1. Système destiné à mettre en tension un dispositif de stockage d'énergie (12) dans un cadre (4) d'une bicyclette (2), **caractérisé en ce que** le système comprend au moins deux cales (16, 18), ainsi que le cadre (4) et le dispositif de stockage d'énergie (12), une première cale (16) étant formée sur le dispositif de stockage d'énergie (12) et une deuxième cale (18) étant formée sur le cadre (4), les cales (16, 18) étant disposées de telle sorte que, lors de l'insertion du dispositif de stockage d'énergie (12) dans le cadre (4), les cales (16, 18) exercent une pression l'une contre l'autre afin de mettre en tension le dispositif de stockage d'énergie (12) dans le cadre (4).

2. Système selon la revendication 1, dans lequel au moins l'une des cales (16 ; 18) présente une surface droite (20), une surface légèrement inclinée (22) et une surface fortement inclinée (24), et dans lequel les surfaces (20, 22, 24) sont conçues pour venir en contact avec l'autre cale (18 ; 16) afin de mettre en tension le dispositif de stockage d'énergie (12) dans le cadre (4).

3. Système selon l'une quelconque des revendications précédentes, dans lequel le dispositif de stockage d'énergie (12) est déplaçable, lors de son insertion, axialement transversalement au tube inférieur (6) et axialement le long du tube inférieur (6), et dans lequel le système est conçu de telle sorte que, lors de l'insertion, le dispositif de stockage d'énergie (12) puisse être déplacé axialement transversalement au tube inférieur (6) jusqu'à un point de butée, et dans lequel le système est conçu de telle sorte que, lors de l'insertion, après avoir atteint le point de butée par déplacement axial transversalement au tube inférieur (6), le dispositif de stockage d'énergie (12) puisse être déplacé axialement le long du tube inférieur (6) afin de mettre en tension le dispositif de stockage d'énergie (12) dans le cadre (4).

4. Système selon l'une quelconque des revendications 1 ou 2, dans lequel le dispositif de stockage d'énergie (12) est rotatif autour d'un axe de rotation lors de son insertion, et dans lequel le système est conçu de telle sorte que, lors de l'insertion, le dispositif de stockage d'énergie (12) soit mis en rotation autour d'un axe de rotation s'étendant transversalement au tube inférieur (6) afin de mettre en tension le dispositif de stockage d'énergie (12) dans le cadre (4).

5. Système selon la revendication 4, dans lequel le tube inférieur (6) présente une extrémité supérieure (6a) et une extrémité inférieure (6b), et dans lequel le dispositif de stockage d'énergie présente une extrémité supérieure (12a) et une extrémité inférieure (12b), et dans lequel les cales (16, 18) sont formées au niveau des extrémités supérieures ou inférieures (12a ; 12b, 6a ; 6b), et dans lequel l'axe de rotation, qui est transversal au tube inférieur (6), est formé à l'autre extrémité (6b ; 6a) du tube inférieur (6) afin de mettre en tension le dispositif de stockage d'énergie (12) dans le cadre (4).

6. Système selon l'une quelconque des revendications 4 ou 5, dans lequel chacune des cales (16 ; 18) présente exactement une surface inclinée (22 ; 24).

7. Système selon l'une quelconque des revendications précédentes, dans lequel au moins une cale (16 ; 18) fait partie intégrante du cadre (4) ou du dispositif de stockage d'énergie (12).

8. Système selon l'une quelconque des revendications précédentes, dans lequel au moins une cale (16 ; 18) est conçue pour être disposée, en tant que pièce rapportée, sur le cadre (4) ou sur le dispositif de stockage d'énergie (12).

9. Système selon l'une quelconque des revendications précédentes, dans lequel le système présente plusieurs cales (16, 18), qui sont formées entre le dispositif de stockage d'énergie (12) et le cadre (4).

10. Bicyclette (2), la bicyclette (2) comprenant un système selon l'une quelconque des revendications précédentes afin de mettre en tension le dispositif de stockage d'énergie (12) dans le cadre (4).
